# EUROPÄISCHE PATENTSCHRIFT

(11) **EP 2 245 114 B1**
(45) Veröffentlichungstag und Bekanntmachung des Hinweises auf die Patenterteilung: **25.04.2012**
(21) Anmeldenummer: 09714907.4
(22) Anmeldetag: 26.02.2009
(51) Int. Cl.: C09K 17/36, C09K 8/575, C09K 8/56, C09K 8/80, C04B 12/04, C04B 28/00, C04B 28/24

(54) **BINDEMITTEL ZUR BINDUNG VON SCHÜTTUNGEN UND LOSEN FORMATIONEN UND VERFAHREN ZU DEREN HERSTELLUNG**
BINDERS FOR BINDING BEDS AND LOOSE FORMATIONS AND PROCESSES FOR PRODUCING THEM
LIANTS POUR LIER DES REMBLAIS ET DES FORMATIONS EN VRAC ET LEURS PROCÉDÉS DE PRODUCTION

(30) Priorität: 27.02.2008 DE 102008011413
(43) Veröffentlichungstag der Anmeldung: 03.11.2010
(73) Patentinhaber: EPG (Engineered Nanoproducts Germany) AG, 66482 Zweibrücken (DE)
(72) Erfinder: SCHMIDT, Christian, 66119 Saarbrücken (DE); SCHMIDT, Helmut, 66130 Saarbrücken-Güdingen (DE)
(74) Vertreter: Barz, Peter
(86) Internationale Anmeldenummer: PCT/EP2009/052273
(87) Internationale Veröffentlichungsnummer: WO 2009/106562

(56) Entgegenhaltungen:
- DE-A1-102006 018 938
- DE-A1-102006 018 939
- US-A1- 2005 127 550

## Beschreibung

Die Erfindung betrifft ein Bindemittel, Verfahren zur Bindung von Schüttungen und losen Formationen mit diesem Bindemittel und damit hergestellte gebundene Produkte.

Bindemittel zur Bindung von Schüttungen und losen Formationen sind bekannt. So beschreiben z.B. DE-A-102004004615, EP-A-06706316, WO 2007/121972 und WO 2007/121975 Systeme, die zur Konsolidierung von Schüttungen oder losen Formationen verwendet werden. In der Regel wird dabei so vorgegangen, dass ein reaktives lösliches System in eine Schüttung oder lose Formation infiltriert und über eine Reaktion verfestigt wird. Hierfür werden verschiedene Materialien herangezogen, z.B. organische Monomere, hydrolysierbare und kondensierte Alkoxide, die über Sol-Gel-Reaktionen aktiviert werden, oder Mischungen aus beiden.

Von entscheidender Bedeutung ist, dass die Verfestigungs- oder Härtungsreaktion erst dann startet, wenn der Infiltrationsprozess abgeschlossen ist. Ansonsten besteht die Gefahr, dass das Bindemittel z.B. Zuleitungen blockiert oder an der Oberfläche des zu infiltrierenden Schüttguts bereits verfestigt wird und nicht in das Schüttgut eindringt. Daher muss das Abbindeverhalten des Bindemittels so eingestellt werden, dass eine Verfestigung sicher erst dann beginnt, wenn die Infiltration abgeschlossen ist bzw. wenn durch einen weiteren Schritt ein Teil des Bindemittels wieder ausgespült oder ausgeblasen wurde, um Porosität aufrecht zu erhalten.

Um dies zu erreichen, muss die Kinetik des Abbindeprozesses gut bekannt sein und exakt reproduzierbar eingestellt werden können. Dazu eignen sich zum Beispiel radikalische Polymerisationsmechanismen, die über eine bekannte Initialperiode verfügen. Es hat sich z.B. erwiesen, dass thermisch initiierbare Peroxide als Radikalbildner geeignet sind. Reine Sol-Gel-Systeme sind auch geeignet, sie zeigen jedoch eine starke Abhängigkeit von äußeren Randparametern, wie z.B. pH-Wert und Wassergehalt. Es handelt sich um so genannte "lebende Systeme", deren Stabilität mit der Zeit nachlässt, so dass sie für spezielle technische Zwecke häufig nicht besonders gut geeignet sind.

Im vorstehend aufgeführten Stand der Technik werden Systeme beschrieben, die für die Verfestigung von Schüttungen oder losen Formationen gedacht sind. Dabei werden Mischsysteme aus Sol-Gel-Zusammensetzungen, organischen Monomeren oder Oligomeren mit reaktiven Doppelbindungen und Startern auf Basis von Peroxiden beschrieben. Die Peroxide werden so gewählt, dass nach Erreichen der Starttemperatur noch eine gewisse Zeit vergeht, ehe ein nennenswerter Effekt im Hinblick auf eine erhöhte Viskosität des Systems festgestellt wird. Die Starttemperatur ist die Temperatur, bei der die Zerfallsrate der Peroxide ausreicht, um eine Polymerisations-Kettenreaktion in Gang zu setzen.

Auf diese Weise kann man z.B. eine Monomerlösung, die mit einem entsprechenden Starter ausgestattet ist, in eine Schüttung infiltrieren, die auf einer vorgegebenen Temperatur gehalten wird, und über die dem Starter eigene Initialperiode die Verfestigung nach einem festgesetzten Zeitpunkt einleiten. Dabei ist eine exakte Abstimmung der vorgegebenen Temperatur der Schüttung, der Zerfallstemperatur des Starters und die Kenntnis der Reaktionsenthalpie erforderlich, um ein so genanntes "Durchgehen" der Reaktion und, dadurch bedingt, eine zu frühe Verfestigung zu vermeiden.

Allerdings wird im vorstehend aufgeführten Stand der Technik nicht auf die Wirkung von feinteiligen Komponenten auf den Ablauf der Ketten- bzw. Verfestigungsreaktion eingegangen bzw. dieser berücksichtigt. So wurde in eigenen Untersuchungen festgestellt, dass feinteilige Komponenten, z.B. Schichtsilicate oder gemahlene keramische Komponenten oder Oxide (Tonminerale, Al₂O₃, ZrO₂, Fe₂O₃, Steingut oder Steinzeug) zu einer frühen Initiierung der Radikalbildung aus peroxidischen Startern vermutlich durch katalytische Effekte an Ecken und Kanten von anwesenden feinsten Partikeln im System führen. So reduzierte die Zugabe feinster oxidischer Partikel, wie feiner Tonminerale und klein gemahlener keramischer Partikel, die "offene" Zeit (Zeit bis zur Gelbildung oder einer Viskositätserhöhung um mehrere Zehnerpotenzen) von etwa 4 Stunden auf etwa 1 Stunde. Da insbesondere in natürlichen Formationen, die gebunden werden sollen, über das Vorhandensein, die Art, die Menge und die Aktivität solcher Partikel keine Aussage gemacht werden kann, ist auch das Vorhandensein solcher Partikel in den zu bindenden Systemen ein Hinderungsgrund, solche Bindemittelsysteme in der Praxis einzusetzen.

Die Aufgabe bestand daher in der Bereitstellung eines Bindemittels, das für die Bindung von Schüttungen aller Art oder geologischen Formationen geeignet ist und sicherstellt, dass es in seiner Wirkungsweise durch aktive Oberflächen feinster Partikel nicht beeinträchtigt wird, insbesondere in Bezug auf die vorstehend erläuterte "offene" Zeit. Insbesondere sollte dies für Bindemittel mit Radikalstartern, wie peroxidischen Startern, bei Anwendung des oben geschilderten Prinzips der radikalischen Polymerisation mit verzögerter Wirkung nach der Infiltration von Schüttungen erreicht werden.

Hinzu kommt, dass bei gleichzeitiger Verwendung von polykondensierbaren Alkoxiden, insbesondere bei Verwendung oder Mitverwendung von Silanen, der Einfluss des pH-Werts auf den Kondensationsprozess hoch ist. Daraus resultiert die Gefahr, dass ein z.B. Schüttungs- oder Formations-bedingter Einfluss auf den pH-Wert ebenfalls einen Einfluss auf die offene Zeit hat. Auch darauf wird im vorstehenden Stand der Technik nicht eingegangen.

Es wurde nun überraschenderweise gefunden, dass durch Abpufferung von Reaktionsmischungen aus vorkondensierten Sol-Gel-Systemen und organischen Bindemittelkomponenten wie Monomeren mit einer Pufferlösung, insbesondere aus einer organischen Säure und einer konjugierten Base, wie einem Essigsäure/Acetat-Puffer, keinerlei Einfluss durch feinste Partikel auf die Eigenschaften des Bindemittels mehr zu beobachten ist.

Dementsprechend betrifft die Erfindung ein Bindemittel, das A) ein Hydrolysat oder Heterokondensat aus mindestens einer hydrolysierbaren Siliciumverbindung und mindestens einer Metall-, Phosphor- oder Borverbindung, wobei das Metall ausgewählt ist aus Al, Ge, Sn, Pb, Ti, Mg, Li, V, Nb, Ta, Zr und Hf, B) mindestens ein organisches polymerisierbares oder polykondensierbares Monomer oder Oligomer und C) einen Puffer, so dass der pH-Wert des gepufferten Bindemittels im Bereich von 4 bis 6 liegt, der gegebenenfalls einen Komplexbildner enthält, umfasst, wobei gegebenenfalls die mindestens eine hydrolysierbare Siliciumverbindung eine oder mehrere hydrolysierbare Siliciumverbindungen mit mindestens einer nicht hydrolysierbaren Gruppe oder Oligomere (Polykondensate) davon umfasst.

Das erfindungsgemäße Bindemittel besitzt überraschenderweise eine ähnlich lange offene Zeit, wenn es für Schüttungen oder Formationen eingesetzt wird, die sehr feine Teilchen umfassen, wie in einer Umgebung ohne solche Teilchen. Dies zeigen eigene Untersuchungen mit Suspensionen mit solchen Teilchen im Vergleich zu teilchenfreien Systemen im Test mit einem Rheometer, bei dem der Viskositätsverlauf als Funktion der Zeit gemessen wurde. Die teilchenhaltige Suspension hat eine bis zu dem Faktor 3 kürzere offene Zeit. Das gepufferte teilchenhaltige System dagegen weist eine nahezu gleiche offene Zeit auf wie das teilchenfreie System. Auf diese Weise gelingt auch bei solchen Situationen eine vollständige Infiltration der Schüttung oder Formation mit dem erfindungsgemäßen Bindemittel, ohne dass es zu einer vorzeitigen Härtung kommt, die eine vollständige Infiltration unmöglich macht. Außerdem wurde überraschenderweise festgestellt, dass sich die mechanische Festigkeit der gebundenen Schüttungen oder Formationen durch den Einsatz einer Pufferlösung deutlich verbessern kann.

Ohne sich an eine Theorie binden zu wollen, werden diese verbesserten Eigenschaften mechanistisch darauf zurückgeführt, dass durch die pH-Einstellung und pH-Stabilisierung durch den Puffer, z.B. auf einen pH von etwa 4,75 für den Essigsäure/Acetat-Puffer, die Aktivität oder Katalysatorwirkung von vorhandenen feinsten Partikeln gehemmt wird. Als eine Erklärung kann ins Feld geführt werden, dass von Nanopartikeln bekannt ist, dass sie mit organischen Säuren oder Komplexbildnem oberflächenmodifiziert werden können- Dies bedeutet, dass eine chemische Bindung entsteht, die die Aktivität der Oberfläche an dieser Stelle erniedrigt. Als Säuren kommen organische Säuren in Betracht, als Komplexbildner z.B. ß-Diketone, deren komplexbildend Wirkung auf Kationen wie Al³⁺, Zr⁴⁺, Ti⁴⁺ und anderen bekannt ist. Da sowohl die Komplexbildung von organischen Säuren als auch die von β-Diketonen und anderen pH-abhängig ist, ist eine stabile Wirkung nur in einem gepufferten System erzielbar.

Mit der Erfindung ist es nun möglich, die erfindungsgemäßen Bindemittel, bei denen es sich bevorzugt um radikalisch polymerisierbare lösliche Bindemittelsysteme handelt, zur Infiltration und anschließenden Verfestigung von losen Schüttungen oder Formationen heranzuziehen, ohne dass die Gefahr besteht, durch einen unkontrollierten Start der Reaktion die gewünschte Verfestigung der Schüttung oder Formation über das ganze Volumen hinweg zu verfehlen. Im folgenden wird die Erfindung im einzelnen beschrieben. Polymerisation schließt hier sofern nicht näher spezifiziert allgemein Polymerisation, Polykondensation und Polyaddition ein.

Das erfindungsgemäße Bindemittel umfasst ein Hydrolysat oder Heterokondensat aus Siliciumverbindungen und Metall-, Phosphor- oder Borverbindungen. Als Si-Komponente wird mindestens eine hydrolysierbare Siliciumverbindung verwendet. Es können zwei oder mehr hydrolysierbarer Siliciumverbindungen und/oder zwei oder mehr Metall-, Phosphor- oder Borverbindungen zusammen verwendet werden. Gegebenenfalls umfasst die mindestens eine hydrolysierbare Siliciumverbindung eine oder mehrere hydrolysierbare Siliciumverbindungen mit mindestens einem nicht hydrolysierbaren organischen Rest, wobei die organischen Reste der eingesetzten Si-Verbindungen bevorzugt keine polymerisierbare Gruppen aufweisen.

Bei der mindestens einen hydrolysierbaren Siliciumverbindung kann es sich z.B. um mindestens eine hydrolysierbare Siliciumverbindung ohne nicht hydrolysierbare Gruppen handeln. Beispiele für einsetzbare hydrolysierbare Siliciumverbindungen ohne nicht hydrolysierbare Gruppen sind Siliciumverbindungen der allgemeinen Formel

SiX₄ (I)

worin die Reste X gleich oder verschieden sind und hydrolytisch abspaltbare Gruppen oder Hydroxygruppen darstellen.

Geeignete Beispiele für hydrolytisch abspaltbare bzw. hydrolysierbare Gruppen X sind Wasserstoff, Halogen (F, Cl, Br oder I, insbesondere Cl oder Br), Alkoxy (z. B. C₁₋₆-Alkoxy, wie z. B. Methoxy, Ethoxy, n-Propoxy, i-Propoxy und n-, i-, sek.- oder tert.-Butoxy), Isocyanato, Aryloxy (vorzugsweise C₆₋₁₀-Aryloxy, wie z. B. Phenoxy), Alkaryloxy, z.B. Benzoyloxy, Acyloxy (z. B. C₁₋₆-Acyloxy, vorzugsweise C₁₋₄-Acyloxy, wie z. B. Acetoxy oder Propionyloxy) und Alkylcarbonyl (z. B. C₂₋₇-Alkylcarbonyl wie Acetyl). Ebenfalls geeignet sind NH₂, mit Alkyl, Aryl und/oder Aralkyl mono- oder disubstituiertes Amino, wobei Beispiele für die Alkyl-, Aryl und/oder Aralkylreste die nachstehend für R angegebenen sind, Amido wie Benzamido oder Aldoxim- oder Ketoximgruppen. Zwei oder drei Gruppen X können auch miteinander verbunden sein, z. B. bei Si-Polyolkomplexen mit Glycol, Glycerin oder Brenzcatechin. Die genannten Gruppen können gegebenenfalls Substituenten, wie Halogen, Hydroxy oder Alkoxy enthalten.

Bevorzugte hydrolysierbare Reste X sind Halogen, Alkoxygruppen und Acyloxygruppen. Besonders bevorzugte hydrolysierbare Reste sind Alkoxygruppen, bevorzugter C₁₋₄-Alkoxygruppen, insbesondere Methoxy und Ethoxy.

Konkrete Beispiele für hydrolysierbare Siliciumverbindungen der Formel SiX₄ sind Si(OCH₃)₄, Si(OC₂H₅)₄, Si(OC₃H₇)₄, SiCl₄, HSiCl₃, Si(OOCCH₃)₄. Von diesen hydrolysierbaren Silanen ist Tetraethoxysilan (TEOS) besonders bevorzugt.

Als weitere Komponente für das Heterokondensat wird eine zusätzliche Verbindung, insbesondere eine hydrolysierbare Verbindung, von einem Element ausgewählt aus den Hauptgruppen I., II., III., IV. und V. und den Nebengruppen IV. und V. eingesetzt. Es handelt sich dabei um P, B oder ein Metall aus diesen Gruppen, insbesondere Al, Ge, Sn, Pb, Ti, Mg, Li, V, Nb, Ta, Zr und Hf. Durch diese Komponente wird die Korrosionsresistenz und Hydrolysebeständigkeit des gehärteten Bindemittels erhöht. Hydrolysierbare Verbindungen von Titan, Aluminium, Zirconium, Zinn und Bor sind besonders bevorzugt, wobei Titanverbindungen am meisten bevorzugt sind. Die Verbindungen können einzeln oder als Mischung aus zwei oder mehr dieser Elemente eingesetzt werden.

Bei der Metall-, Phosphor- oder Borverbindung kann es sich um eine Verbindung der Formel (II) handeln

MXₐ (II)

worin M P, B, Al, Ge, Sn, Pb, Ti, Mg, Li, V, Nb, Ta, Zr und Hf ist, X gleich oder verschieden ist und hydrolytisch abspaltbare Gruppen oder Hydroxygruppen darstellt und a der Wertigkeit des Elements entspricht, wobei bei Einsatz von Komplexliganden a auch größer oder bei mehrzähnigen Liganden auch kleiner als die Wertigkeit von M sein kann, oder um entsprechende lösliche Oxide oder Hydroxide. Die Wertigkeit von M ist in der Regel 1, 2, 3, 4 oder 5. Gegebenfalls umfasst die Verbindung der Formel (II) auch ein Gegenion. Beispiele für X sind wie vorstehend für Formel (I) definiert, einschließlich der bevorzugten Beispiele, wobei zwei Gruppen X durch eine Oxogruppe ersetzt sein können. X kann neben den in Formel (I) angegeben Substituenten auch Sulfat, Nitrat, ein Komplexbildner, wie z.B. ein β-Diketon, eine gesättigte oder ungesättigte Carbonsäure oder das Salz davon, eine anorganische Säure oder ein Salz davon und ein Aminoalkohol sein. Die Metall-, Phosphor- oder Borverbindung ist insbesondere eine hydrolysierbare Verbindung. Bei der Phosphorverbindung kann es sich z.B. um Phosphoroxide oder Phosphate handeln. Bevorzugt werden Metall- oder Boralkoxide eingesetzt.

In einer bevorzugten Ausführungsform werden Metall-, Phosphor- oder Borverbindungen, die Komplexliganden umfassen, oder eine Kombination von Metall-, Phosphor- oder Borverbindungen und einem Komplexliganden, eingesetzt. Ohne sich an eine Theorie binden zu wollen, wird angenommen, dass bei Einsatz einer Kombination von Metall-, Phosphor- oder Borverbindungen und einem Komplexliganden zur Herstellung des Hydrolysats und Kondensats sich in situ eine Anbindung des Komplexliganden an das Zentralatom der eingesetzten Metall-, Phosphor- oder Borverbindung ergeben kann. Geeignete Kombinationen kann der Fachmann ohne weiteres auswählen. Die Kombination kann z.B. durch einfaches Mischen der beiden Komponenten erhalten werden. Beispiele für Komplexliganden sind Acetylacetonat, Ethylacetoacetat, Dialkyldithiophosphat, Dodecylbenzolsulfonsäure, Ölsäure und Palmitinsäure.

In einer Ausführungsform kann der Komplexligand einen polymerisierbaren Rest umfassen. Die polymerisierbare organische Gruppe kann jede übliche, dem Fachmann bekannte Gruppe sein, die mit sich selbst oder einer oder mehreren anderen korrespondierenden polymerisierbaren Gruppen eine Polymerisation eingehen kann. Polymerisation schließt hier in der Beschreibung neben der bevorzugten radikalischen Polymerisation auch ganz allgemein Polykondensation und Polyaddition ein.

Als Metallverbindungen sind die Alkoxide von Ti, Zr und Al, insbesondere von Ti, bevorzugt. Geeignete Metall-, Phosphor- oder Borverbindungen einschließlich solcher mit Komplexbildner sind z.B. Ti(OC₂H₅)₄, Ti(O-n- oder i-C₃H₇)₄, Ti(OC₄H₉)₄, TiCl₄, Ti(O-iC₃H₇)₂Cl₂, Hexafluorotitansäure, TiOSO₄, Diisopropoxybis(ethylaceto-acetato)titanat, Poly(dibutyltitanat), Tetrakis(diethylamino)titan, Titan-2-ethylhexoxid, Titanbis(triethanolamin)diisopropoxid, Titanchloridtriisopropoxid, Al(OC₂H₅)₃, Al(O-sek.-C₄H₉)₃, AlCl(OH)₂, Al(NO₃)₃, Zr(OC₃H₇)₄, Zirconium-2-ethylhexoxid, BCl₃, B(OCH₃)₃ und SnCl₄, Zr(OC₃H₇)₂(OOC(CH₃)=CH₂)₂, Titanacetylacetonat, Titan-oxidbis(pentandionat), Ti(OC₃H₇)₃(OOC(CH₃)=CH₂) und Ti(OC₂H₄)₃(Allylacetoacetat), Phosphoroxide oder Phosphate. Von den Metallverbindungen sind Ti(O-iC₃H₇)₄, Ti(OC₄H₉)₄, Titanbis(triethanolamin)diisopropoxid und Ti(OC₃H₇)₃(OOC(CH₃)=CH₂) und weitere Komplexbildner umfassende Ti-Verbindungen besonders bevorzugt. Wie gesagt kann alternativ eine Kombination von der Metall-, Phosphor- oder Borverbindung mit dem gewünschten Komplexbildner eingesetzt werden.

Gegebenenfalls können zusätzlich zu oder anstelle der obengenannten hydrolysierbaren Siliciumverbindungen der Formel (I) eine oder mehrere hydrolysierbare Siliciumverbindungen mit mindestens einer nicht hydrolysierbaren organischen Gruppe zur Bildung des Hydrolysats oder Heterokondensats eingesetzt werden. Es handelt sich z.B. um Verbindungen bzw. Silane der allgemeinen Formel (III)

RₙSiX₄₋ₙ (III)

worin die Reste R gleich oder verschieden sind und hydrolytisch nicht abspaltbare Gruppen darstellen, die Reste X gleich oder verschieden sind und hydrolytisch abspaltbare Gruppen oder Hydroxygruppen darstellen und n den Wert 1, 2 oder 3, vorzugsweise 1 oder 2, hat.

Als Beispiele für X wird auf die oben genannten Beispiele für X in der Formel (I) verwiesen, wobei die bevorzugten Gruppen auch hier bevorzugt sind. Die hydrolytisch nicht abspaltbaren Reste R sind z. B. Alkyl z. B. C₁₋₂₀-Alkyl, insbesondere C₁₋₄-Alkyl, wie Methyl, Ethyl, n-Propyl, i-Propyl, n-Butyl, i-Butyl, sek.-Butyl und tert.-Butyl, Aryl, insbesondere C₆₋₁₀-Aryl, wie Phenyl und Naphthyl, und entsprechende Aralkyl- und Alkarylgruppen, wie Tolyl und Benzyl, und cyclische C₃-C₁₂-Alkylgruppen, wie Cyclopropyl, Cyclopentyl und Cyclohexyl. Die Reste R können übliche Substituenten aufweisen, z.B. Halogen, wie Chlor oder Fluor, und Alkoxy. Der Rest R besitzt bevorzugt keine polymerisierbare Gruppe. Bevorzugte Reste R sind Alkylgruppen mit vorzugsweise 1 bis 4 Kohlenstoffatomen, insbesondere Methyl und Ethyl, sowie Arylreste wie Phenyl.

Beispiele für konkrete Organosilane der allgemeinen Formel (III) sind Verbindungen der folgenden Formeln:
CH₃SiCl₃, CH₃Si(OC₂H₅)₃, C₂H₅SiCl₃, C₂H₅Si(OC₂H₅)₃, C₃H₇Si(OC₂H₅)₃, C₆H₅Si(OC₂H₅)₃, (C₂H₅O)₃Si-C₃H₆-Cl, (CH₃)₂SiCl₂, (CH₃)₂Si(OC₂H₅)₂, (CH₃)₂Si(OCH₃)₂, (CH₃)₂Si(OH)₂, (C₆H₅)₂SiCl₂, (C₆H₅)₂Si(OC₂H₅)₂, (i-C₃H₇)₃SiOH, n-C₆H₁₃CH₂CH₂Si(OC₂H₅)₃, n-C₈H₁₇CH₂CH₂Si(OC₂H₅)₃, CH₂OCH₂CH₂O(CH₂)₃-Si(OC₂H₅)₃.

Besonders bevorzugte Silane der Formel (III) sind Alkylsilane, insbesondere Alkyltrialkoxysilane, wobei Methyltrimethoxysilan und insbesondere Methyltriethoxysilan (MTEOS) besonders bevorzugt sind.

In einer Ausführungsform kann mindestens eine Siliciumverbindung mit mindestens einer nicht hydrolysierbaren Gruppe der Formel (III) in Kombination mit mindestens einer hydrolysierbaren Siliciumverbindung der Formel (I) als Si-Komponente eingesetzt werden. Es können auch nur eine oder mehrere hydrolysierbare Siliciumverbindungen mit mindestens einer nicht hydrolysierbaren Gruppe als Si-Komponente eingesetzt werden wie die Silane der Formel (III), die bevorzugt keine polymerisierbare Gruppe umfassen.

In einer weiteren Ausführungsform kann als eine hydrolysierbare Siliciumverbindung mit mindestens einem nicht hydrolysierbaren organischen Rest zur Herstellung des Hydrolysats oder Heterokondensats eine Verbindung eingesetzt werden, deren nicht hydrolysierbarer organischer Rest eine polymerisierbare Gruppe trägt. Dabei kann es sich um Silane der Formel (III) handeln, bei denen mindestens ein Rest R eine polymerisierbare Gruppe und eine zweiwertige Brückengruppe zur Anbindung an das Si umfasst.

Beispiele für die polymerisierbare Gruppe sind Epoxid, Hydroxy, Amino, Monoalkylamino, Dialkylamino, gegebenenfalls substituiertes Anilino, Amid, Carboxy, Alkenyl, Alkinyl, Acryloyl, Acryloyloxy, Methacryloyl, Methacryloyloxy, Mercapto, Cyano, Isocyanato, Aldehyd, Keto, Alkylcarbonyl, Säureanhydrid und Phosphorsäure. Die polymerisierbare Gruppe ist über zweiwertige Brückengruppen, insbesondere Alkylen- oder Arylen-Brückengruppen, die durch Sauerstoff- oder -NH-Gruppen unterbrochen sein können, an das Siliciumatom gebunden. Die Brückengruppen enthalten z. B. 1 bis 6 Kohlenstoffatome. Die genannten zweiwertigen Brückengruppen leiten sich z. B. von den oben genannten einwertigen Alkyl- oder Arylresten ab. Bevorzugt ist die Brückengruppe eine Alkylen-, insbesondere eine Propylengruppe.

Konkrete Beispiele sind Vinylsilane, Acrylsilane und Methacrylsilane, wie Vinyltriethoxysilan, (Meth)acryloyloxyalkyltrimethoxysilan und (Meth)acryloyloxyalkyltriethoxysilan, z.B. Methacryloyloxypropyltrimethoxysilan.

Silane und nachstehend beschriebene Polysiloxane lassen sich nach bekannten Methoden herstellen; vgl. W. Noll, "Chemie und Technologie der Silicone", Verlag Chemie GmbH, Weinheim/Bergstraße (1968).

Das Molverhältnis von Si-Atomen aller eingesetzten Si-Verbindungen zu den Metall-Phosphor- und Boratomen aller eingesetzten vorstehend genannter Metall-, Phosphor- und Borverbindungen kann in breiten Bereichen gewählt werden, beträgt aber bevorzugt 10:1 bis 1:3 und bevorzugter 5:1 bis 1:1.

Neben den genannten Metall-, Phosphor- oder Borverbindungen können zusätzliche Metallverbindungen eingesetzt werden. Beispiele für derartige Metallverbindungen sind Verbindungen von anderen glas- oder keramikbildenden Metallen, insbesondere Verbindungen mindestens eines Metalls aus der Hauptgruppe III und V und/oder der Nebengruppen II bis VIII des Periodensystems der Elemente. Es handelt sich z.B. um hydrolysierbare Verbindungen von Mn, Cr, Fe, Ni, Ga, In, Sc, Y und Zn. Ebenfalls einsetzbar sind z.B. hydrolysierbare Verbindungen von Elementen der Hauptgruppen I und II des Periodensystems z. B. Na, K und Ca. Auch hydrolysierbare Verbindungen der Lanthanoiden wie Ce können verwendet werden. Es handelt sich dabei etwa um Metallverbindungen der allgemeinen Formel M'Xₐ, worin M' ein Metall der Hauptgruppen I, II, III oder V oder der Nebengruppen II bis VIII des Periodensystems der Elemente oder ein Lanthanoid ist, X und a wie in Formel (II) definiert sind.

Das Bindemittel umfasst ferner eine rein organische Polymerkomponente, so dass eine zusätzliche organische Matrix aufgebaut werden kann. Die organische Komponente aus den nachstehend definierten Monomeren oder Oligomeren ist bevorzugt löslich. Durch zusätzlichen Einsatz einer derartigen organischen Komponente kann eine noch weiter verbesserte mechanische Festigkeit und Flexibilität erzielt werden. Auf diese Weise ergeben sich nach dem Härten zwei sich durchdringende Polymere, nämlich das Heterokondensat und ein rein organisches Polymer, so dass IPN-Polymere (IPN = Interpenetrierende Netzwerke, siehe z.B. Römpp Chemie Lexikon, 9. Auflage, S. 2007) gebildet werden, die vorstehend allgemein beschrieben wurden. Die sich durchdringenden Polymere können rein physikalisch gemischt sein. Ohne sich an eine Theorie binden zu wollen, kann eine gewisse Anbindung von Heterokondensat und rein organischer Komponente über die vorstehend erläuterte Verwendung von Komplexbildner mit polymerisierbarer Gruppe erreicht werden. Neben der Anbindung über Komplexierung ist auch eine Anbindung über ionische Wechselwirkungen, dipolare Wechselwirkungen, Wasserstoffbrückenbindungen oder van-der-Waals-Wechselwirkungen denkbar. Wenn z.B. Vinylpyridin als Monomer für die organische Komponente eingesetzt wird, kann der Pyridinstickstoff mit Si-OH-Gruppen der anorganischen Komponente über Säure/Base-Reaktionen auch bzw. zusätzlich eine Anbindung über ionische Anbindung ermöglichen.

Für die organische Bindemittelkomponente werden ein oder mehrere organische polymerisierbare oder polykondensierbare Monomere oder Oligomere verwendet. Diese können eine oder mehrere polymerisierbare oder polykondensierbare Gruppen aufweisen, wobei radikalisch polymerisierbare Gruppen bevorzugt sind. Bevorzugt sind thermisch polymerisierbare oder polykondensierbare Gruppen. Es kann auch ein Gemisch aus zwei oder mehr Monomeren oder Oligomeren verwendet werden. Die jeweiligen Vorteile der Alternativen werden weiter unten beschrieben. Beispiele für polymerisierbare Gruppen sind Epoxid, Hydroxy, Amino, Monoalkylamino, Dialkylamino, gegebenenfalls substituiertes Anilino, Amid, Carboxy, Alkenyl, Alkinyl, Acryloyl, Acryloyloxy, Methacryloyl, Methacryloyloxy, Mercapto, Cyano, Isocyanato, und Säureanhydrid, bevorzugt sind C=C-Doppelbindungen, insbesondere Acryl- und Methacrylgruppen, Hydroxy-, Amino-, Carboxyl-, Säureanhydridgruppen, Epoxid- und/oder Isocyanatgruppen. Weitere Beispiele sind Säurechloridgruppen, Nitril-, Isonitril- und SH-Gruppen.

Das organische Monomer oder Oligomer umfasst bevorzugt mindestens zwei polymerisierbare oder polykondensierbare Gruppen. Die polymerisierbaren Gruppen dienen allgemein zur Polymerisation oder Verknüpfung der organischen Komponente, wobei es sich um eine polymerisierbare bzw. polykondensierbare Gruppe oder um korrespondierende polymerisierbare bzw. polykondensierbare Gruppen handeln kann.

Organische Monomere oder Oligomere als Bindemittelkomponente sind dem Fachmann bestens vertraut und er kann sie ohne weiteres in geeigneter Weise je nach Bedarf auswählen. Bei der eingesetzten organischen Komponente kann es sich um definierte Einzelverbindungen oder Gemische von Verbindungen mit unterschiedlichem Polymerisationsgrad handeln.

Es können Monomere oder Oligomere eingesetzt werden, die bei Polymerisation z. B. Polyisocyanate, Melaminharze, Polyester oder Epoxidharze ergeben. Mono-, bi- oder polyfunktionelle Acrylate und Methacrylate werden bevorzugt als Monomere oder Oligomere eingesetzt. Beispiele für das organische Monomer oder Oligomer sind Diethylenglycoldimethacrylat (DEGDMA), Triethylenglycoldimethacrylat (TEGDMA), Bisphenol A-glycidylmethacrylat (BisGMA), Bisphenol A-diacrylat, Acrylsäurebutylester (AB), Diurethandimethacrylat, Urethandimethacrylat (UDMA), Styrol, Styrolderivate, Vinylpyridin, Vinylbenzolsulfonsäure, Laromer^{®}-Acrylate der BASF, Ebecryl^{®}, Pentaerythrittriacrylat (PETIA), Hexandioldiacrylat, Trimethylolpropantriacrylat, Trimethylolpropantrimethacrylat, Neopentylglycoldimethacrylat, Neopentylglycoldiacrylat, Epoxyacrylatharze, oligomere Methacrylate, wie LR 8862, LR 8907 von BASF, oder oligomere Urethanacrylate, wie UA 19T von BASF, sowie Oligomere der genannten Monomere.

Als zusätzliche Komponente kann das Bindemittel Polysiloxane, wie z.B. Poly-(alkoxysilane) oder Polyalkylsiloxane oder entsprechende Polyarylsiloxane und Copolymere davon, umfassen. Es können Polysiloxane eingesetzt werden, die keine reaktiven Gruppen tragen. Bevorzugt werden aber Polysiloxane eingesetzt, die mindestens eine reaktive Gruppe, insbesondere eine reaktive Endgruppe, aufweisen. Man kann dadurch IPN-Polymere mit kovalenten Bindungen zwischen den sich durchdringenden Polymeren erhalten. Es können aber auch IPN-Polymere gebildet werden, die rein physikalisch gemischt sind.

Es gibt eine große Vielfalt an Poly(alkoxysilanen), Polyalkylsiloxanen und Polyarylsilanen und Copolymeren davon mit reaktiven Endgruppen. Insbesondere sind solche Polysiloxane, insbesondere Polyalkylsiloxane, mit reaktiven Gruppen bzw. Endgruppen kommerziell erhältlich, z.B. von Gelest, Inc., Philadelphia. Beispiele für die reaktive Gruppe oder Endgruppe sind Vinyl, Hydrid, Silanol, Alkoxy, Amine, Epoxy, Carbinol, Methacrylat/Acrylat, Mercapto, Acetoxy, Chlorid und Dimethylamin. Über die reaktiven Gruppen bzw. Endgruppen können die Polysiloxane in das anorganische Netzwerk und gegebenenfalls in die organische Matrix eingebunden bzw. vernetzt werden. Wenn z.B. Polysiloxane mit Silanol-Endgruppen eingesetzt werden, wird die Silanol-Gruppe mit Hydroxygruppen der hydrolysierten Silane oder der Metall- oder Borverbindungen reagieren. Dadurch wird die Elastizität bzw. Druckfestigkeit des Formkörpers überraschenderweise noch weiter erhöht.

Die Polysiloxane können verzweigt oder bevorzugt linear sein. Die reaktive Gruppe kann an der Hauptkette oder einer Seitenkette vorliegen, ist aber bevorzugt eine Endgruppe. Es können natürlich mehr als eine reaktive Gruppe vorhanden sein, z.B. 2 oder mehr reaktive Gruppen. Ein lineares Polysiloxan enthält z.B. bevorzugt 2 reaktive Endgruppen. Als Polysiloxane mit reaktiven Gruppen oder Endgruppen werden Polysiloxane mit Silanol- und Alkoxy-Gruppen bevorzugt eingesetzt, insbesondere Polysiloxane mit Silanol-Endgruppen.

Beispiele für Poly(alkoxysilane), Polyalkyl- bzw. Polyarylsiloxane und Copolymere davon sind Polydimethylsiloxane, Polydiethylsiloxane, Polymethylethylsiloxane, Polydiphenylsiloxane und entsprechende Copolymere, die jeweils mindestens eine reaktive Gruppe enthalten. Spezielle Beispiele sind Polydimethylsiloxane mit Silanol-Endgruppen oder mit Alkoxy-Endgruppen, Poly(diethoxysiloxane) und Polydimethoxysiloxane.

Das Molekulargewicht der verwendeten Polysiloxane kann je nach Anwendungsbereich aus einem großen Bereich ausgewählt werden, beispielsweise im Bereich von 100 bis 10.000 g/mol. Bevorzugt sind Polysiloxane mit einem Molekulargewicht von 100 bis 3500 g/mol und bevorzugter 300 bis 3000 g/mol, z.B. 400 bis 2000 g/mol. Es können auch höhermolekulare Polysiloxane eingesetzt werden, z.B. mit einem Molekulargewicht bis zu 50000 g/mol oder mehr. Unter dem Molekulargewicht wird hier das Zahlenmittel des Molekulargewichts verstanden.

Das Gewichtsverhältnis aller eingesetzten anorganischen Komponenten, einschließlich der darin enthaltenen organischen Gruppen, zu den eingesetzten rein organischen Komponenten kann in breiten Bereichen gewählt werden und beträgt, bezogen auf das gehärtete Bindemittel, z.B. 95:5 bis 5:95 und bevorzugt 80:20 bis 20:80.

Durch die Zugabe der organischen Komponente können IPN (Inter-Penetrierendes-Netzwerk)-Polymere aus sich durchdringenden Polymeren, nämlich dem Heterokondensat und dem rein organischen Polymer, aufgebaut werden.

Zur Herstellung des Hydrolysats oder Heterokondensats wird die mindestens eine Siliciumverbindung und die mindestens eine Metall-, Phosphor oder Borverbindung, durch Vermischung mit Wasser einer Hydrolyse unterworfen, wobei die Reaktion bevorzugt nach dem nachstehend diskutierten CCC-Verfahren durchgeführt wird, um ein homogenes Heterokondensat aus Si-Komponenten und Metall-, Phosphor- oder Borkomponenten zu erhalten. Die Hydrolyse erfolgt insbesondere nach dem Sol-Gel-Verfahren. Beim Sol-Gel-Verfahren werden allgemein die hydrolysierbaren Verbindungen mit Wasser, gegebenenfalls in Gegenwart von sauren oder basischen Katalysatoren, hydrolysiert. Vorzugsweise erfolgt die Hydrolyse in Gegenwart saurer Katalysatoren, z. B. Salzsäure oder Phosphorsäure, vorzugsweise bei einem pH-Wert von 1 bis 3. Das sich bildende Sol kann durch geeignete Parameter, z. B. Kondensationsgrad, Lösungsmittel oder pH-Wert, auf die für das Bindemittel gewünschte Viskosität eingestellt werden. Sol-Gel-Prozesse sind seit langem bekannt. Einzelheiten des Sol-Gel-Verfahrens sind z.B. bei C.J. Brinker, G.W. Scherer: "Sol-Gel Science - The Physics and Chemistry of Sol-Gel-Processing", Academic Press, Boston, San Diego, New York, Sydney (1990) beschrieben.

Für die Hydrolyse können stöchiometrische Wassermengen, aber auch geringere oder größere Mengen verwendet werden, z.B. bis zu 1,2 Mol Wasser pro Mol der vorhandenen hydrolysierbaren Gruppen. Vorzugsweise wird eine unterstöchiometrische Wassermenge, bezogen auf die vorhandenen hydrolysierbaren Gruppen, angewandt. Die zur Hydrolyse und Kondensation der hydrolysierbaren Verbindungen eingesetzte Wassermenge beträgt vorzugsweise 0,1 bis 0,9 Mol, und besonders bevorzugt 0,25 bis 0,75 Mol Wasser pro Mol der vorhandenen hydrolysierbaren Gruppen. Oft werden besonders gute Ergebnisse mit weniger als 0,7 Mol Wasser, insbesondere 0,45 bis 0,65 Mol Wasser, pro Mol der vorhandenen hydrolysierbaren Gruppen erzielt. Als vorhandene hydrolysierbare Gruppen werden hier alle hydrolysierbaren Gruppen der insgesamt zugegebenen Ausgangsverbindungen verstanden, also einschließlich der gegebenenfalls erst später zugegebenen Metall-, Phosphor- oder Borverbindungen.

Hydrolysierbare Siliciumverbindungen und Metall-, Phosphor oder Borverbindungen weisen im Hinblick auf Hydrolyse und Kondensation unterschiedliche Reaktivitäten auf. Ferner sind die Hydrolyseprodukte mehr oder weniger instabil, so dass sich nach erfolgter Hydrolyse Kondensationsreaktionen anschließen. Werden z.B. hydrolysierbare Siliciumverbindungen und Titanverbindungen gleichzeitig hydrolysiert, so werden praktisch unvermeidlich separate TiO₂-Partikel gebildet, so dass ein Großteil des Ti nicht in das sich bildende Kondensat eingebaut wird. Das hat zur Folge, dass sich kein homogenes Mischkondensat ausbilden kann.

In einer bevorzugten Ausführungsform erfolgt die Hydrolyse daher in zwei oder mehr Stufen nach dem sogenannten chemisch gesteuerten Kondensationsverfahren (CCC-Verfahren, chemically controlled condensation process). Hierbei wird berücksichtigt, dass die eingesetzten hydrolysierbaren Verbindungen unterschiedliche Hydrolysereaktivitäten aufweisen. So besitzen Tetraalkoxysilane wie TEOS im allgemeinen eine geringere Reaktivität als Alkyltrialkoxysilane wie MTEOS, die ihrerseits eine geringere Hydrolysereaktivität als Dialkyldialkoxysilane besitzen. Wie vorstehend ausgeführt besitzen insbesondere die Metall-, Phosphor- oder Borverbindungen in der Regel eine höhere Hydrolysereaktivität als hydrolysierbare Silane. Diese unterschiedlichen Reaktivitäten sind dem Fachmann bekannt.

Nach dem bevorzugten zwei- oder mehrstufigen Hydrolyseverfahren werden zuerst eine oder mehrere hydrolysierbare Verbindungen mit niedrigerer Hydrolysereaktivität mit im allgemeinen der Menge an Wasser, die für die Bildung des Hydrolysats oder Kondensats vorgesehen ist, gemischt, um diese Verbindungen vorzuhydrolysieren, und dann werden zu dieser Mischungen eine oder mehrere hydrolysierbare Verbindungen mit höherer Hydrolysereaktivität zugesetzt. Dies kann bei Bedarf noch weiter ausdifferenziert werden, indem drei oder mehr Stufen ausführt werden, wobei in der ersten Stufe eine oder mehrere Verbindungen mit der geringsten Hydrolysereaktivität vorhydrolysiert werden, in der letzten Stufe eine oder mehrere Verbindungen mit der höchsten Hydrolysereaktivität und in der oder den mittleren Stufen Verbindungen mit mittlerer Hydrolysereaktivität zugesetzt werden.

Bei der Herstellung des Hydrolysats oder Heterokondensats in zwei oder mehr Stufen erfolgt zunächst eine Hydrolyse der Silane durch Mischung von hydrolysierbaren Silanen und Wasser, gegebenenfalls in Anwesenheit eine Katalysators. Durch die Hydrolyse wird das zugegebene freie Wasser verbraucht. Die hydrolysierten Silane können anschließend Kondensationsreaktionen eingehen, bei denen wieder Wasser freigesetzt wird. Auch wenn Kondensationsreaktionen gegebenenfalls schon einsetzen können, bevor die Silane vollständig hydrolysiert worden sind, sinkt der Gehalt bzw. die Konzentration an freiem Wasser in der Mischung nach Zugabe des Wassers mit der Zeit auf ein Minimum und steigt dann aufgrund von Kondensationsreaktionen wieder an. Da, bezogen auf die hydrolysierbaren Gruppen der hydrolysierbaren Silane, bevorzugt höchstens eine stöchiometrische Menge und bevorzugter eine unterstöchiometrische Menge Wasser zugesetzt wird, wird das eingesetzte Wasser zunächst vollständig oder im wesentlichen vollständig verbraucht, ehe durch die Kondensation wieder Wasser freigesetzt wird, d.h. im Minimum ist praktisch kein Wasser oder nur wenig Wasser in der Mischung vorhanden.

Gemäß der Erfindung wird somit die Metall-, Phosphor- oder Borverbindung zu der Mischung aus der hydrolysierbaren Siliciumverbindung und Wasser gegeben, wenn das Wasser in der Reaktionsmischung durch die Hydrolyse im wesentlichen verbraucht worden ist, d.h. zum Zeitpunkt der Zugabe der Metall-, Phosphor- oder Borverbindung ist in der Reaktionsmischung kein Wasser oder nur eine geringe Menge Wasser vorhanden, bevorzugt weniger als 15%, bevorzugter weniger als 10% und besonders bevorzugt weniger als 5% der Wassermenge, die zur Hydrolyse zugesetzt wurde. Die Metall-, Phosphor- oder Borverbindung wird auch insbesondere zugegeben, bevor durch die Kondensationsreaktionen sich wieder ein höherer Gehalt an freiem Wasser in der Reaktionsmischung bildet.

Da es sich bei den stattfindenden Reaktionen um Gleichgewichtsreaktionen handelt und teilweise auch bereits bei der Hydrolyse Kondensationsreaktionen stattfinden können, können noch geringe Mengen an Wasser vorhanden sein, wenn das zugesetzte Wasser in der Reaktionsmischung verbraucht ist. Wichtig ist, dass die Zugabe der Metall-, Phosphor- oder Borverbindung erfolgt, wenn der Gehalt an Wasser in der Reaktionsmischung minimal ist bzw. im Bereich des Minimums liegt.

Dem Fachmann sind die Verfahren zur Bestimmung des Wassergehalts in einer Mischung vertraut. Beispiele für geeignete Verfahren sind die Karl-Fischer-Titration oder IR-Spektroskopie. Die geeignete Zeitspanne zur Zugabe der Metall- oder Borverbindung kann auch einfach empirisch z.B. im Rahmen von Vorversuchen bestimmt werden, bei denen die Metall-, Phosphor- oder Borverbindung zu bestimmten Zeitpunkten zur Mischung hydrolysierbare Siliciumverbindung/Wasser zugegeben wird und anschließend z.B. durch Photokorrelationsspektroskopie (PCS) geprüft wird, ob sich Partikel bilden, bei denen es sich um die Oxide der Metall- oder Borverbindung handelt, etwa TiO₂-Teilchen. Sofern sich solche Partikel bilden, ist die Zugabe zu früh oder zu spät erfolgt. Die geeignete Zeitspanne zur Zugabe, in der diese Teilchen nicht gebildet werden, kann auf diese Weise leicht bestimmt werden.

Eine andere, leicht durchführbare Methode zur Feststellung des Zugabezeitpunkts ist die Ermittlung des Klarpunkts. Vor dem Einsetzen der Hydrolyse ist die Silanphase mit Wasser nicht mischbar. Bei Zugabe von Wasser wird dies durch eine Trübung der gerührten Reaktionsmischung angezeigt. Erst durch die Bildung von Alkohol und ≡SiOH bei gleichzeitigem Verbrauch von Wasser wird das System einphasig und zeigt den weitgehenden Verbrauch von H₂O an. Am Klarpunkt gehen diese beiden Phasen ineinander über und die Reaktionsmischung klart sich auf. Auch wenn die Reaktionsmischung trübe bleibt, z.B. wegen vorhandener Polysiloxane, ist dieser "Klarpunkt" noch erkennbar. Da der Klarpunkt in der Regel ungefähr dann auftritt, wenn das zugesetzte Wasser im wesentlichen verbraucht worden ist bzw. der Wassergehalt minimal ist, kann die Metall-, Phosphor- oder Borverbindung zugegeben werden, wenn der Klarpunkt erreicht worden ist. Dies schließt eine Zugabe kurz vor oder nach dem Klarpunkt natürlich ein.

Das erhaltene Hydrolysat oder Kondensat kann wie es ist verwendet werden. Das sich bildende Sol kann durch geeignete Parameter, z. B. Kondensationsgrad, Lösungsmittel oder pH-Wert, auf die für das Bindemittel gewünschte Viskosität eingestellt werden. In einer bevorzugten Ausführungsform lässt man das Bindemittel durch einfaches Stehenlassen reifen bzw. altern, z.B. für mindestens 1 h und bevorzugt mindestens 5 h. Danach kann es für die gedachte Anwendung für das Bindemittel eingesetzt werden.

Es wurde auch überraschenderweise festgestellt, dass ein noch homogeneres Heterokondensat (z.B. bei Abwesenheit von Polysiloxanen) erhalten werden kann, wenn die Ausgangsmaterialien unverdünnt, d.h. ohne Lösungsmittel, eingesetzt werden. Die Hydrolyse und Kondensation werden daher bevorzugt ohne Zugabe von Lösungsmittel durchgeführt. Es ist dabei zu berücksichtigen, dass sich bei den Hydrolysereaktionen der Ausgangsmaterialien wie den Alkoholaten Lösungsmittel in situ bilden kann. Das Reaktionsgemisch ist daher beim Fortschritt der Hydrolyse in der Regel nicht lösungsmittelfrei, aber wesentlich weniger verdünnt als es sonst nach dem Stand der Technik üblich ist. Nach Vervollständigung der Reaktion, z.B. nach der obigen Reifung kann Lösungsmittel zugegeben werden, z.B. zur Einstellung der Viskosität.

Bei einem zwei- oder mehrstufigen Verfahren kann die vorgesehene Menge an Wasser vollständig im ersten Schritt zugegeben werden. In einer Ausführungsform kann von der vorgesehenen Menge ein Teil erst nach der Zugabe der Metall-, Phosphor- oder Borverbindung zugegeben werden. In diesem Fall können nicht 100% der vorgesehenen Wassermenge wie vorstehend beschrieben im ersten Schritt zur Hydrolyse verwendet werden, sondern z.B. 90 bis 20% und bevorzugt 70 bis 30% der vorgesehenen Wassermenge wie vorstehend beschrieben. Der Rest der vorgesehenen Menge wird dann z.B. direkt nach der Zugabe der hydrolysierbaren Metall-, Phosphor- oder Borverbindung oder bevorzugt nach einer Reifung zugegeben. In einer anderen Ausführungsform können 100% der vorgesehenen Wassermenge wie vorstehend beschrieben im ersten Schritt zur Hydrolyse verwendet werden und eine zusätzliche Menge Wasser kann nach der Zugabe der Metall-, Phosphor- oder Borverbindung zugegeben werden. Zweckmäßige Mengen für das zusätzliche Wasser entsprechen dann den vorstehend angegebenen Mengen für den ersten Schritt. Es kann auch mehr Wasser zugegeben werden, vor allem nach erfolgter Reifung.

Die organische Komponente (Monomere und/oder Oligomere) wird bevorzugt nach Herstellung des Heterokondensats zugegeben, sie kann aber auch vorher zugegeben werden. In diesem Fall wird die Bindemittelkomponente zu einer Vorstufe des Heterokondensats gegeben, also z.B. zu den hydrolysierbaren oder den hydrolysierten Siliciumverbindungen oder zur Metall-, Phosphor- oder Borverbindung. Die optionale Polysiloxankomponente wird bevorzugt zusammen mit der anderen Si-Komponenten vorgelegt, bevor das Wasser zugegeben wird. Gegebenenfalls kann sie auch zu einem späteren Zeitpunkt zugegeben werden. Das Bindemittel kann durch Zugabe von Lösungsmittel verdünnt werden.

Zur Erzielung einer ausreichend niedrig viskosen Masse kann es von Vorteil sein, wenn man die organische Bindemittelkomponente in Form von Monomeren oder kurzkettigen Oligomeren einsetzt, die jeweils mindestens eine polymerisierbare Gruppe aufweisen. Diese werden dann bei der Härtung unter Bildung von Polymeren polymerisiert. Noch nicht vollständig hydrolysierte bzw. polykondensierte anorganischen Anteile lassen sich z.B. bei der Härtung durch Eindiffusion von Feuchtigkeit weiter umsetzen, so dass ein stabiles anorganisches Netzwerk entsteht.

Eine andere Variante ist der Einsatz von nichtreaktiven Oligomeren oder Polymeren als zusätzliche organische Komponente. Der Vorteil solcher Systeme besteht darin, dass für die nichtreaktiven Oligomere oder Polymere eine Polymerisationsschrumpfung nicht mehr eintritt. In Verbindung mit hydrolysierbaren Silanen, die einen hohen Anteil an nicht polymerisierbaren organischen Gruppen tragen, können damit Bindemittel hergestellt werden, die bei der Gelbildung beziehungsweise Verfestigung (Härtung) kaum Schrumpfung zeigen und sich somit insbesondere zur Abdichtung eignen.

Durch die Verwendung von anorganischen und organischen Komponenten, die sowohl hydrophile als auch hydrophobe Gruppen tragen (inerte Kohlenwasserstoffgruppen = hydrophob; SiOH-Gruppen = hydrophil), entstehen so genannte amphiphile Bindemittel, die eine gute Adhäsion sowohl zu hydrophilen als auch zu hydrophoben Oberflächen haben. Der Vorteil dieser Eigenschaft ist, dass z.B. lose oder lockere Substrate wie Schüttungen gebunden oder gefüllt werden können, unabhängig davon, ob sie eine hydrophile oder eine hydrophobe Oberfläche aufweisen.

Das Bindemittel umfasst als weitere wesentliche Komponente eine Pufferlösung, auch als Puffer bezeichnet. Durch den Puffer wird zum einen der pH-Wert des Bindemittels auf einen gewünschten Wert eingestellt, zum anderen ist das Bindemittel stabilisiert bzw. "gepuffert", d.h. bei Verdünnungen des Bindemittels oder bei Säure- oder Basenzugaben zum Bindemittel in nicht zu großen Mengen ändert sich der pH-Wert des Bindemittels kaum. Durch die Zugabe der Pufferlösung wird der pH-Wert des Bindemittels auf einen Wert im Bereich von 4 bis 6, bevorzugter 4,5 bis 6 oder 4 bis 5 eingestellt.

Puffer sind im allgemeinen Lösungen aus einer schwachen Säure und der konjugierten Base bzw. einem dissoziierten Neutralsalz der Säure oder einer schwachen Base und der konjugierten Säure oder einem dissoziierten Neutralsalz der Base. Erfindungsgemäß sind Puffer auf Basis einer schwachen Säure und der konjugierten Base bevorzugt Es kann sich auch um polymere Puffer oder um Mischungen verschiedener Säuren und/oder Basen handeln. Dem Fachmann sind solche Puffer und deren nutzbarer Pufferbereich bekannt. Für das erfindungsgemäße Bindemittel können alle üblichen, für diesen pH-Bereich geeigneten Puffersysteme verwendet werden und der Fachmann kann sie ohne weiteres auswählen.

Essigsäure/Acetat-Puffer können z.B. durch Mischung einer starken Base, z.B. KOH, NaOH oder NaOEt, und Essigsäure in einem Lösungsmittel, wie Alkohol, bevorzugt Ethanol, erhalten werden. Ein geeigneter Puffer kann z.B. durch Auflösen der Base in Ethanol und anschließender Zugabe von Essigsäure erhalten werden.

Der Puffer kann mit einem organischen Lösungsmittel, bevorzugt Alkohol, wie Methanol oder Ethanol, gebildet werden. Bevorzugt werden alkoholische Puffer, besonders bevorzugt ethanolische Puffer eingesetzt. Somit werden besonders bevorzugt Puffersubstanzen eingesetzt, die in Alkohol, besonders bevorzugt Ethanol löslich sind. Bei Puffern auf Basis organischer Säuren kann das Salz der organischen Säure z.B. 1 bis 20 Gew.-% des Puffers ausmachen. Puffer können im allgemeinen innerhalb eines bestimmten pH-Bereichs ihre Pufferwirkung ausüben.

Solche Puffer sind im Handel erhältlich oder können vom Fachmann ohne weiteres hergestellt werden. Puffer auf Basis schwacher Säuren lassen sich z.B. durch Zugabe einer bestimmten Menge an Base zu einer Lösung einer schwachen Säure, Zugabe von Säure zu einem Salz einer schwachen Säure oder Mischung einer schwachen Säure mit einem Salz der konjugierten Base herstellen. Analog lassen sich Puffer auf Basis schwacher Basen herstellen. In der Fachliteratur gibt es entsprechende Puffertabellen mit Mengenangaben zu den einzusetzenden Komponenten und den damit erhältlichen pH-Werten.

Hauptkriterien für den eingesetzten Puffer sind der pH-Bereich, in dem der Puffer wirksam ist und seine Löslichkeit in dem verwendeten Lösungsmittel, das bevorzugt ein Alkohol wie Methanol oder Ethanol ist. Der wirksame Pufferbereich des Puffers sollte zumindest teilweise im pH-Bereich von 2 bis 7, bevorzugt 4 bis 5, liegen. Bei dem Puffer handelt es sich bevorzugt um Puffer mit Säuren, z.B. anorganischen oder bevorzugt organischen Säuren.

Beispiele für geeignete Puffer sind (in Klammern ist der wirksame Pufferbereich angegeben): Essigsäure/Acetat-Puffer (pH = 3,7-5,7), Citronensäure/Trinatriumcitrat-Puffer (pH = 2,2-8), Weinsäure/Tartrat-Puffer, 2-(4-(2-Hydroxyethyl)-1-piperazinyl)ethansulfonsäure (pH = 6,8-8,2) und 2-(N-Morpholino)ethansulfonsäure (pH = 5-7). Puffer mit organischen Säuren sind besonders bevorzugt. Besonders bevorzugt ist ein Essigsäure/Acetat-Puffer, mit dem der pH-Wert bevorzugt auf etwa 4,75 eingestellt werden kann. Puffer auf Carbonsäurebasis sind bevorzugt, da sie neben der Pufferwirkung auch die offene Zeit bzw. Gelierzeit verlängern können.

Das Puffersystem umfasst bevorzugt einen Komplexbildner. Durch den Komplexbildner können "Spitzen", z.B. von Oxidkomponenten, die Metallkomponenten wie z.B. Al, Ti oder Zr enthalten, "deaktiviert" werden.

Der Komplexbildner kann z.B. eine organische Säure oder ein Chelatbildner sein. Der Komplexbildner eignet sich bevorzugt zur Komplexierung von höherwertigen Ionen bzw. Metallionen, wie z.B. Al-, Ti- oder Zr-Ionen. Diese sind dem Fachmann bekannt. Beispiele für Komplexbildner bzw. Chelatbildner sind α- und ß-Hydroxycarbonylverbindungen, wie Hydroxycarbonsäuren, -ketone oder -aldehyde und ihre Analoga wie ß-Diketone, wie Acetylaceton und Ethylacetoacetat, Polyoxycarbonsäuren, Polyamine, wie Ethylendiamin, Aminoalkohole wie Triethanolamin, Dialkyldithiophosphat, Dodecylbenzolsulfonsäure, EDTA und Nitrilotriessigsäure, wobei β-Diketone besonders bevorzugt sind. Beispiele für organische Säuren sind Essigsäure, Citronensäure, Weinsäure, Ölsäure und Palmitinsäure. Der Komplexbildner wird bevorzugt so gewählt, das er beim eingestellten pH-Wert eine komplexbildende Wirkung auf die im Bindemittel enthaltenen Metallkationen, wie z.B. Al³⁺, Zr⁴⁺ oder Ti⁴⁺, bzw. den daraus abgeleiteten Oxiden besitzt.

Wenn der bevorzugte Puffer mit einer organischen Säure verwendet wird, wirkt die organische Säure gleichzeitig als Komplexbildner. Für eine komplexierende Wirkung braucht man in diesem Fall keinen zusätzlichen Komplexbildner. Sofern der Puffer selbst keinen Komplexbildner beinhaltet, z.B. bei einem Puffer mit einer anorganischen Säure, wird bevorzugt ein zusätzlicher Komplexbildner, besonders bevorzugt ein Chelatbildner, zum Puffer gegeben, um die komplexierende Wirkung zu erreichen. Der gegebenenfalls eingesetzte zusätzliche Komplexbildner wird bevorzugt zum Puffer gegeben und dann mit dem Puffer zum Bindemittel gegeben, gegebenenfalls ist auch eine separate Zugabe des Komplexbildners zum Bindemittel möglich.

Der Puffer kann zu jedem beliebigen Zeitpunkt zum Bindemittel zugesetzt werden, im allgemeinen wird er nach Herstellung des Hydrolysats oder Kondensats oder nach der Reifung davon zugegeben. Er kann vor, zusammen mit und nach der Zugabe der organischen Komponente zugegeben werden.

Wenn das Bindemittel durch die Herstellung des Hydrolysats oder Heterokondensats einen stark sauren oder basischen pH-Wert aufweist, kann der Puffer eine entsprechende hierfür vorgesehene, gegebenenfalls zusätzliche Menge an Säure oder Base umfassen, um den pH-Wert auf gewünschten Wert zu bringen, dass heißt die im Bindemittel enthaltene Säure oder Base, die z.B. aus der Herstellung des Heterokondensats stammt, wird "neutralisiert". Geeignete Basen zur Veränderung des pH-Werts eines sauren Bindemittels auf den gewünschten Wert sind z.B. starke Basen, wie Alkalihydroxide, z.B. KOH oder NaOH, oder Alkalialkoxide, wie KOEt, KOMe oder NaOEt. Die erforderliche Menge an zusätzlicher Base oder Säure zur Änderung auf den gewünschten pH-Wert kann vom Fachmann ohne weiteres ausgerechnet werden.

Es kann sich gegebenenfalls um dieselbe Säure oder Base handeln, die auch zur Herstellung des eigentlichen Puffers verwendet wird. In diesem Fall wird eine größere Menge an Säure bzw. Base zur Herstellung des Puffers verwendet als es zur Herstellung des eigentlichen Puffers erforderlich wäre. Die für die Veränderung des pH-Werts des Bindemittels auf den gewünschten Wert erforderliche Menge an Base oder Säure kann natürlich auch als gesonderte Komponente unabhängig von dem eigentlichen Puffer zum Bindemittel gegeben werden, die Aufnahme in den Puffer ist aber in der Regel zweckmäßiger.

Zum Bindemittel werden bevorzugt auch ionische oder radikalische Starter oder Initiatoren für die Polymerisation zugegeben, vorzugsweise thermische Initiatoren, wobei radikalische Initiatoren bevorzugt sind. Der Starter initiiert die Polymerisation, wodurch das Bindemittel gehärtet bzw. vernetzt wird. Diese Katalysatoren sind dem Fachmann bekannt und er kann die geeigneten unter Berücksichtigung der verwendeten Komponenten ohne weiteres auswählen. Beispiele für radikalische Thermostarter sind organische Peroxide, z.B. Diacylperoxide, Peroxydicarbonate, Alkylperester, Alkylperoxide, Perketale, Ketonperoxide und Alkylhydroperoxide, und Azoverbindungen. Konkrete Beispiele sind Dibenzoylperoxid, Trigonox^{®} 121, tert-Butylperbenzoat, Amylperoxy-2-ethylhexanoat und Azobisisobutyronitril. Diese Starter werden in den üblichen, dem Fachmann bekannten Mengen eingesetzt, z.B. 0,01 bis 5 Gew.-%, bezogen auf den Gesamtfeststoffgehalt des Bindemittels. Besonders bevorzugt werden Peroxide als Polymerisationsinitiatoren eingesetzt.

Beispiele für Lösungsmittel, die für das Bindemittel eingesetzt werden können, sind Alkohole, vorzugsweise niedere aliphatische Alkohole (C₁-C₈-Alkohole), wie Methanol, Ethanol, 1-Propanol, Isopropanol und 1-Butanol, Ketone, vorzugsweise niedere Dialkylketone, wie Aceton und Methylisobutylketon, Ether, vorzugsweise niedere Dialkylether, wie Diethylether, oder Monoether von Diolen, wie Ethylenglycol oder Propylenglycol, mit C₁-C₄-Alkoholen, Amide, wie Dimethylformamid, Tetrahydrofuran, Dioxan, Sulfoxide, Sulfone oder Butylglycol und deren Gemische. Bevorzugt werden Alkohole verwendet. Es können auch hochsiedende Lösungsmittel eingesetzt werden; z. B. Polyether wie Triethylenglycol, Diethylenglycoldiethylether und Tetraethylenglycoldimethylether.

Andere herkömmliche Additive, die dem Bindemittel gegebenenfalls zugegeben werden können, sind z. B. Farbstoffe, Pigmente, Viskositätsregulatoren und Tenside. Für die Herstellung von Emulsionen des Bindemittels können z.B. die bei Siliconemulsionen üblichen stabilisierenden Emulgatoren wie z.B. Tween^{®} 80 und Brij^{®} 30 herangezogen werden.

Das erhaltene erfindungsgemäße Bindemittel liegt vorzugsweise partikelfrei als Lösung oder Emulsion vor, es ist bevorzugt frei von kristallinen Produkten oder Partikeln, dies kann z.B. durch Photokorrelationsspektroskopie (PCS) nachgewiesen werden. Es handelt es sich bevorzugt um ein Bindemittelsol.

Erfindungsgemäß wird dementsprechend bevorzugt ein Bindemittel bereitgestellt, das ein Heterokondensat umfasst, das eine Metallo-, Phosphoro- oder Borosiloxan ist und Heteroatomeinheiten von Heteroatomen ausgewählt aus P, B, Al, Ge, Sn, Pb, Ti, Mg, Li, V, Nb, Ta, Zr und Hf, die über Sauerstoffbrücken in das Siloxangerüst eingebaut sind, und Siloxaneinheiten, bei denen das Siliciumatom gegebenenfalls eine nicht hydrolysierbare organische Gruppe aufweist, enthält. Durch das bevorzugt eingesetzte CCC-Verfahren wird ein homogene Verteilung der Si-Atome und der Metall-, Bor- oder Phosphoratome im Gerüst erreicht, wodurch eine gute Hydrolysestabilität erreicht wird. Das Heteroatom ist je nach Wertigkeit über 2, 3 oder 4 Sauerstoffbrücken in das Siloxangerüst eingebaut. Bevorzugt werden als Heteroatome B, Al, Sn, Ti oder Zr eingesetzt, so dass Boro-, Alumino-, Stanno-, Titano- oder Zirconosiloxane gebildet werden, wobei Titanosiloxane besonders bevorzugt sind. Zumindest ein Teil der Si-Atome oder alle Si-Atome des Siloxangerüsts weisen bevorzugt eine nicht hydrolysierbare organische nicht polymerisierbare Gruppe auf.

Ein weiterer wichtiger Vorteil der erhaltenen Bindemittel besteht darin, dass sie auch nach längerer Zeit als Sol oder Lösung vorliegen und kein Gel bilden. Das erfindungsgemäße Bindemittel ist durch die Pufferlösung im pH-Wert gepuffert. Dadurch wird wie in den Beispielen gezeigt die Gelierzeit des Bindemittels bei der Initiierung der Polymerisation im Vergleich zu ungepufferten Bindemitteln deutlich erhöht, insbesondere wenn feinste Partikel im System zugegen sind. Es zeigte sich auch eine Verbesserung der mechanischen Eigenschaften der gebundenen Körper.

Es werden öl-, heißwasser- und temperaturbeständige Bindemittel erhalten. Sie eignen sich zur Herstellung von Formkörpern und zur Festigung von losen oder lockeren Substraten, insbesondere feinteiligen, pulverförmigen oder gekörnten Substraten, insbesondere anorganischem Granulat, wobei das Bindemittel mit dem Substrat, z.B. in Form von Teilchen, Granulat oder Fasern, gemischt, gegebenenfalls in die gewünschte Form gebracht und dann gehärtet wird. Das abzubindende Substrat kann z.B. aus Metallen, Nichtmetallen, Glas, Keramik, Kohlenstoff, Oxiden, Nitriden, Carbiden, Boriden, Mineralien, Kunststoffen, Kunststofffasern, Glasfasern, Mineralfasern, Naturfasern, Sand, Erdreich, Kies, Betone, Zemente, Stroh und Holzwerkstoffen ausgewählt werden. Das Substrat kann z.B. eine geologische Formation, eine Körnung oder Schüttung, Erdreich oder Gestein sein.

Das erfindungsgemäße Bindemittel wird zur Festigung des Substrats, z.B. des anorganischen Granulats, wie z.B. Sand, eingesetzt. Hierfür wird z.B. eine Schüttung des Substrats mit dem Bindemittel gemischt und dann gehärtet. Die Mischung kann auf übliche Weise erfolgen, z.B. durch Vermengen oder Infiltrieren des Bindemittels in das zu festigende Substrat, z.B. durch Einpumpen.

Die Aushärtung des Bindemittels bzw. des Formkörpers wird bevorzugt thermisch durch Zufuhr von Wärme durchgeführt. Beispiele für hierfür geeignete Katalysatoren bzw. Starter wurden vorstehend genannt. Eine andere Art der Härtung ist die Zufuhr von Kondensationskatalysatoren, die eine weitere Vernetzung der anorganisch vernetzbaren SiOH-Gruppen oder Metall-OH-Gruppen unter Bildung eines anorganischen Netzwerkes bewirken. Hierfür geeignete Kondensationskatalysatoren sind z. B. Basen aber auch Fluoridionen.

Die Eigenschaften von mit einem Bindemittel gebundenen Substraten hängen auch von den Bedingungen ab, unter denen sie gehärtet werden. Die Härtung wird auch als Abbinden bezeichnet. In der Regel erhält man ein verbessertes Verhalten, wenn der Abbindeprozess bei etwa den gleichen Bedingungen erfolgt, bei denen die abgebundenen Substrate eingesetzt werden sollen bzw. vorlieben. Für Anwendungen bei erhöhten Drücken und Temperaturen ist es daher wünschenswert, auch die Herstellung unter etwa den gleichen Bedingungen durchzuführen.

So liegen z.B. in relativ großen Wassertiefen hydrothermale Bedingungen vor, d.h. eine erhöhte Temperatur und erhöhter Druck, so dass es für Anwendungen in solchen Wassertiefen zweckmäßig ist, das Abbinden auch bei den entsprechenden hydrothermalen Bedingungen, z.B. bei Temperaturen oberhalb 40°C und über 1 bar, z.B. mindestens 2 bar, oder direkt vor Ort des Einsatzes durchzuführen. Ein besonderer Vorteil des erfindungsgemäßen Bindemittels besteht darin, dass es auch unter solchen Hydrothermalbedingungen gehärtet bzw. abgebunden werden kann, so dass es für Anwendungen unter diesen Bedingungen, etwa unter Wasser, besonders geeignet ist.

Die Abbindung (Härtung) erfolgt für solche Anwendungen bevorzugt unter erhöhter Temperatur und erhöhtem Druck, bezogen auf die Normalbedingungen, d.h. der Druck ist größer als 1 bar und die Temperatur ist höher als 20°C. Bevorzugt wird das Bindemittel entsprechend den geologischen Rahmenbedingungen des Reservoirs, in der es eingesetzt wird, in der Regel bei Temperaturen oberhalb 40°C und Drücken von über 1 bar, z.B. mehr als 2 bar oder sogar mehr als 40 bar gehärtet. Durch den Einsatz der organischen Komponente wird zudem eine verbesserte mechanische Festigkeit und eine gute Flexibilität durch Bildung des IPN-Polymers nach Abbinden erreicht.

Das erfindungsgemäße Bindemittel kann in Abhängigkeit von den chemischen Eigenschaften der organischen und anorganischen Bestandteile über anorganische Kondensations- und über Polymerisationsreaktionen der eingesetzten organischen polymerisierbaren oder polykondensierbaren Monomere oder Oligomere (parallel zur Kondensation, vor der Kondensation oder nach der Kondensation) verfestigt werden. Je nach eingestelltem Schrumpfungsverhalten kann dabei eine Abdichtung oder lediglich eine Verfestigung einer Schüttung oder einer Körnung erfolgen.

Das Verhalten des erfindungsgemäßen Bindemittels kann gesteuert werden, so dass Zwischenräume oder Kanäle, wie sie z.B. in Formationen, Körnungen und Schüttungen vorkommen, voll ausgefüllt werden oder ganz oder teilweise offen bleiben. Die Festigung des gebundenen Substrats kann somit bei Ausfüllung der Zwischenräume oder Kanäle zu einer Abdichtung führen oder, bei fehlender Ausfüllung, zu einer zumindest teilweisen Beibehaltung der Permeabilität des ungebundenen Substrats.

Wenn das Bindemittel z.B. hauptsächlich aus der anorganischen Komponente besteht, kann die Permeabilität des Substrats aufgrund des vorstehend beschriebenen Synäreseeffekts aufrecht erhalten bleiben, da das Substrat porös bleibt. Dagegen führt die organische Komponente eher zu einer Ausfüllung der Poren oder Kanäle und damit zu einer Abdichtung. Je nach eingesetztem Verhältnis von anorganischer Komponente zu organischer Komponente im Bindemittel können somit eine Festigung und Abdichtung oder eine Festigung und eine zumindest teilweise Beibehaltung der Permeabilität erreicht werden. Da eine Polymerisation der organischen Bindemittelkomponente zu einem Polymerisationsschrumpf führt, kann eine organische Bindemittelkomponente zusätzlich nicht reaktive Oligomere oder Polymere enthalten, wenn z.B. eine vollständige Abdichtung des Substrats gewünscht ist.

Da insbesondere unter Hydrothermalbedingungen ein Abbinden von Materialien mit dem erfindungsgemäßen Bindemittel einen Verdichtungsprozess teilweise oder ganz verhindern kann, kann das Bindemittel Poren großvolumig verschließen. Dies kann z.B. bevorzugt durch Verdrängen des flüssigen Bindemittels aus den Poren, z.B. durch Einblasen eines flüssigen oder gasförmigen Mediums, wie Luft oder Stickstoff, in das abzubindende Material, das mit dem Bindemittel vermengt ist, so dass nur an den Kontaktstellen der Körner Bindemittel übrigbleibt, verhindert bzw. beseitigt werden, wodurch eine Porosität in der gewünschten Weise eingestellt werden kann. Das Einblasen erfolgt insbesondere vor oder während des Abbindens über einen bestimmten Zeitraum.

Parameter für das Durchpumpen, wie Dauer, Zeitpunkt, Menge oder Durchflussgeschwindigkeit der flüssigen oder gasförmigen Phase, können vom Fachmann ohne weiteres in geeigneter Weise gewählt werden, um die gewünschte Porosität einzustellen. Die Einleitung kann z.B. vor oder nach einer teilweisen Härtung erfolgen, wobei nach und/oder während der Einleitung eine vollständige Aushärtung erfolgt. Zur Einleitung eines flüssigen oder gasförmigen Mediums können z.B. ein inertes Lösungsmittel oder Gas, z. B. N₂, CO₂ oder Luft, eingepumpt werden, wodurch die Porenvolumina freigespült und Reaktionsprodukte abgeführt werden. Das flüssige oder gasförmige Medium kann gegebenenfalls Katalysatoren und/oder Gas freisetzende Komponenten oder gelöste Stoffe enthalten.

Das erfindungsgemäße Bindemittel ermöglicht aufgrund seiner chemischen Konstitution wie vorstehend erläutert eine schnelle und wirksame Verfestigung von öl- oder wasserführenden, meist sandhaltigen geologischen Formationen. Weiter wurde gefunden, dass sich die Bindemittel auch besonders gut für kontaminierte Sande, insbesondere ölverschmutzte Sande, eignen, da das Bindemittel Schmutz, insbesondere eine Ölschicht auf der anorganischen Oberfläche unterwandern und ablösen kann. Letzteres hat den zusätzlichen Effekt, dass solche Systeme auch dazu geeignet sind, Fette und Öle von anorganischen Oberflächen abzulösen und z. B. den Austrag solcher Substanzen aus den Zwickeln von Sandschüttungen oder auch geologischen Formationen zu verbessern. Es gelingt somit, Bindungsprozesse in ölhaltigen Sanden zu realisieren und solche Sande von Öl zu reinigen. Eine Behandlung von kontaminiertem Sand mit dem Bindemittel kann somit eine festigende oder eine reinigende Funktion haben oder beide Zwecke erfüllen.

Hierfür kann das Heterokondensat zusätzlich eine Komponente enthalten, die oleophob und hydrophob ist, wodurch das Benetzungsverhalten von geologischen Formationen verändert werden kann. Vorzugsweise können für die oleophobe und hydrophobe Komponente des Heterokondensats als zusätzliche Si-Komponente zur Herstellung des Heterokondensats ein oder mehrere Silane der allgemeinen Formel (IV)

Rf(R)_{b}SiX_{(3-b)} (IV)

eingesetzt werden, worin X wie in Formel (I) und R wie in Formel (III) definiert ist, Rf eine nicht-hydrolysierbare Gruppe ist, die 1 bis 30 Fluoratome an aliphatische Kohlenstoffatome gebunden aufweist, und b 0, 1 oder 2 ist. Diese Verbindungen werden im folgenden auch als Fluorsilane bezeichnet. Das Silan kann im erfindungsgemäßen Verfahren als zusätzliche Si-Komponente genauso eingesetzt werden, wie vorstehend für die anderen Si-Komponenten beschrieben.

In der Formel (IV) ist Rf vorzugsweise eine fluorierte Alkylgruppe, z.B. mit 3 bis 20 C-Atomen und Beispiele sind CF₃CH₂CH₂, C₂F₅CH₂CH₂, n-C₆F₁₃CH₂CH₂, i-C₃F₇OCH₂CH₂CH₂, n-C₈F₁₇CH₂CH₂ und n-C₁₀F₂₁-CH₂CH₂. Bevorzugte Beispiele für Rf sind 1H,1H,2H,2H-Perfluoroctyl. Beispiele für einsetzbare Fluorsilane sind CF₃CH₂CH₂SiCl₂(CH₃), CF₃CH₂CH₂SiCl(CH₃)₂, CF₃CH₂CH₂Si(CH₃)(OCH₃)₂, C₂F₅-CH₂CH₂-SiZ₃, n-C₆F₁₃-CH₂CH₂SiZ₃, n-C₈F₁₇-CH₂CH₂-SiZ₃, n-C₁₀F₂₁-CH₂CH₂-SiZ₃, worin Z = OCH₃, OC₂H₅ oder Cl; i-C₃F₇O-CH₂CH₂CH₂-SiCl₂(CH₃), n-C₆F₁₃-CH₂CH₂-Si(OCH₂CH₃)₂, n-C₆F₁₃-CH₂CH₂-SiCl₂(CH₃) und n-C₆F₁₃-CH₂CH₂-SiCl(CH₃)₂.

Das Bindemittel kann eine Änderung des Benetzungsverhaltens von Sanden bewirken, so dass es eher als ein die Benetzung regulierendes Mittel dient. Hierfür kann es zweckmäßig sein, das Bindemittel in hoher Verdünnung zu verwenden, z.B. mit einem Feststoffgehalt von maximal 10 Gew.-%.

Das erfindungsgemäße Bindemittel kann zur Bildung bzw. Verfestigung von Formkörpern oder Formationen benutzt werden. Insbesondere kann das Bindemittel zur Verfestigung von geologischen Formationen oder von Granulat-Schüttungen, insbesondere auf dem Gebiet der Öl- und Gasförderung, eingesetzt werden. Das Bindemittel eignet sich auch zur Festigung von Formsanden. Weitere Anwendungsgebiete für das Bindemittel sind die Festigung von mürben Sandsteinen in der Architektur oder die Herstellung von Bremsbelägen.

Das erfindungsgemäße Bindemittel eignet sich insbesondere zur Verwendung bei der Herstellung von Bauteilen aus Granulaten, Schüttungen und Fasern aller Art; zur Verfestigung von Formationen und Baugruben; zur Verfestigung von mürbem Sandstein, Beton, Mörtel und Zement; zur Stabilisierung gegen Wasser, wie z.B. zur Vermeidung von Schwellung bei Wassereinbruch in geologischen Formationen von Schichtsilicaten; zur Abdichtung von Erdreich gegen Wasser und Chemikalien (z.B. in Deponien); zur Abdichtung von Formationen in Öl- und Gasquellen; oder zur Verfestigung von Schüttungen und Formationen bei Aufrechterhaltung von Porosität und Permeabilität.

Es folgen Beispiele zur Erläuterung der Erfindung, die diese aber in keiner Weise einschränken sollen.

### Beispiele

### Herstellung Vergleichsbindemittel

100,1 g MTEOS werden mit 13,64 g 1 M HCl versetzt und heftig gerührt. Nach dem Klarpunkt werden 65 g einer Mischung aus 47,85 g Ti(OiPr)₄ und 18,03 g (2-Aceto-acetoxy)ethylmethacrylat hinzugefügt und die Reaktionslösung für 2 h bei Raumtemperatur gerührt. Danach werden 178,5 g DEGDMA hinzugegeben.

### Herstellung Puffer

1,87 g KOH werden in 500 g Ethanol gelöst. Anschließend werden 4,05 g Essigsäure zugegeben.

### Herstellung Bindemittel gemäß der Erfindung

76 mg KOH werden in 16,2 g des zuvor hergestellten Puffers gelöst. Zu dieser Lösung werden 24,4 g des zuvor hergestellten Vergleichsbindemittels (pH = 2) gegeben, um das Bindemittel herzustellen. Der Anteil des Puffers im Bindemittel beträgt 40 Gew.-%. Der pH-Wert des Bindemittels betrug 4,75.

### Vergleich der Eigenschaften

Die Gelierzeit bei Härtung und die uniaxiale Druckfestigkeit (UCS) gehärteter Formkörper von dem Vergleichsbindemittel und dem Bindemittel gemäß der Erfindung wurden untersucht.

### A. Gelierzeit

Die Gelierzeit der beiden Bindemittel wurde bei 2 unterschiedlichen Polymerisations/Härtungsbedingungen untersucht:

| | |
|---|---|
| Polymerisation 1: | 1,1 Gew.-% Radikalstarter, T = 52°C |
| Polymerisation 2: | 1,1 Gew.-% Radikalstarter, T = 52°C, Anwesenheit von 1 Gew.-% feinster Teilchen |

Die Ergebnisse sind in folgender Tabelle zusammengefasst

| | Gelierzeit | |
|---|---|---|
| | Vergleichsbindemittel (ph∼2) | Bindemittel gemäß Erfindung (pH=4,75) |
| Polymerisation 1 | 3,5 h | 4,5 h |
| Polymerisation 2 | 150 min | 4,5 h |

Mit dem erfindungsgemäßen Bindemittel können deutlich längere Gelierzeiten erzielt werden, wodurch eine vollständiger Infiltration in eine Schüttung oder Formation möglich wird.

### B. Druckfestigkeit

Mit dem Vergleichsbindemittel und einem Bindemittel der Erfindung wurden Sand verfestigt, um Formkörper von 5 cm Länge und 16 mm Durchmesser zu erhalten. Das Bindemittel der Erfindung entspricht dem vorstehend beschriebenen, außer dass das Bindemittel 25 Gew.-% Puffer statt 40 Gew.-% Puffer enthielt. Die Härtung erfolgte mit 1,1 Gew.-% Radikalstarter, bei 52°C über 36 h. Die uniaxiale Druckfestigkeit (UCS) der mit dem Vergleichsbindemittel und mit dem Bindemittel der Erfindung verfestigten Formkörpers wurde bestimmt.

| | Vergleichsbindemittel | Bindemittel der Erfindung |
|---|---|---|
| UCS | 4,2 MPa | 7,0 MPa |

## Patentansprüche

1. Bindemittel, umfassend
A) ein Hydrolysat oder Heterokondensat aus mindestens einer hydrolysierbaren Siliciumverbindung und mindestens einer Metall-, Phosphor- oder Borverbindung, wobei das Metall ausgewählt ist aus Al, Ge, Sn, Pb, Ti, Mg, Li, V, Nb, Ta, Zr und Hf,
B) mindestens ein organisches polymerisierbares oder polykondensierbares Monomer oder Oligomer,
C) einen Puffer, so dass der pH-Wert des gepufferten Bindemittels im Bereich von 4 bis 6 liegt, und gegebenenfalls einen Komplexbildner,
wobei gegebenenfalls die mindestens eine hydrolysierbare Siliciumverbindung eine oder mehrere hydrolysierbare Siliciumverbindungen mit mindestens einer nicht hydrolysierbaren Gruppe oder Oligomere davon umfasst.

2. Bindemittel nach Anspruch 1, **dadurch gekennzeichnet, dass** der oder die nicht hydrolysierbaren Reste der optionalen hydrolysierbaren Siliciumverbindungen keine polymerisierbare Gruppe aufweisen.

3. Bindemittel nach Anspruch 1 oder 2, **dadurch gekennzeichnet, dass** der Puffer eine Carbonsäure und die konjugierten Base der Carbonsäure umfasst, wobei der Puffer bevorzugt ein Essigsäure/Acetat-Puffer ist.

4. Bindemittel nach einem der Ansprüche 1 bis 3, **dadurch gekennzeichnet, dass** der Puffer einen Komplexbildner ausgewählt aus organischen Säuren und Chelatbildnern umfasst.

5. Bindemittel nach einem der Ansprüche 1 bis 4, **dadurch gekennzeichnet, dass** das organische polymerisierbare oder polykondensierbare Monomer oder Oligomer eine radikalisch polymerisierbare Gruppe aufweist.

6. Bindemittel nach einem der Ansprüche 1 bis 5, **dadurch gekennzeichnet, dass** die Metall- oder Borverbindung einen Komplexliganden umfasst oder das Hydrolysat oder Heterokondensat in Anwesenheit eines Komplexliganden gebildet wird.

7. Bindemittel nach einem der Ansprüche 1 bis 6, **dadurch gekennzeichnet, dass** die Metall-, Phosphor- oder Borverbindung eine Verbindung von B, Al, Sn, Ti und Zr ist, wobei Ti bevorzugt ist.

8. Bindemittel nach einem der Ansprüche 1 bis 7, **dadurch gekennzeichnet, dass** das Molverhältnis von Si-Atomen zu Metall-, Phosphor- und Boratomen im Bindemittel im Bereich von 10:1 bis 1:3 liegt.

9. Bindemittel nach einem der Ansprüche 1 bis 8, **dadurch gekennzeichnet, dass** für das Hydrolysat oder Heterokondensat mindestens eine hydrolysierbare Siliciumverbindung mit einer nicht hydrolysierbaren organischen Gruppe ohne polymerisierbare Gruppe und mindestens eine hydrolysierbare Siliciumverbindung ohne nicht hydrolysierbare Gruppen eingesetzt wird.

10. Bindemittel nach einem der Ansprüche 1 bis 9, **dadurch gekennzeichnet, dass** das Bindemittel einen Polymerisationsinitiator umfasst, wobei der Polymerisationsinitiator bevorzugt ein Radikalinitiator ist, der bevorzugt ein Peroxid oder eine Azoverbindung ist.

11. Bindemittel nach einem der Ansprüche 1 bis 10, **dadurch gekennzeichnet, dass** es ein Heterokondensat umfasst, das ein Metallo-, Phosphoro- oder Borosiloxan ist und Heteroatomeinheiten von Heteroatomen ausgewählt aus P, B, Al, Ge, Sn, Pb, Ti, Mg, Li, V, Nb, Ta, Zr und Hf, die über Sauerstoffbrücken in das Siloxangerüst eingebaut sind, und Siloxaneinheiten, bei denen das Siliciumatom gegebenenfalls eine nicht hydrolysierbare organische Gruppe ohne polymerisierbare Gruppe aufweist, enthält.

12. Bindemittel nach einem der Ansprüche 1 bis 11, **dadurch gekennzeichnet, dass** das Gewichtsverhältnis von Heterokondensat und organischer Bindemittelkomponente aus den organischen Monomeren oder Oligomeren, bezogen auf das gehärtete Bindemittel, 95:5 bis 5:95 beträgt.

13. Bindemittel nach einem der Ansprüche 1 bis 12, **dadurch gekennzeichnet, dass** das Hydrolysat oder Heterokondensat in mindestens zwei Stufen hergestellt wird, wobei in der ersten Stufe eine oder mehrere hydrolysierbare Verbindungen mit einer geringeren Hydrolysereaktivität vorhydrolysiert werden und in der letzten Stufe eine oder mehrere hydrolysierbare Verbindungen mit einer höheren Hydrolysereaktivität zum Vorhydrolyseprodukt gegeben werden, und/oder dass zur Herstellung des Hydrolysats oder Heterokondensats die Siliciumverbindung zur Hydrolyse mit Wasser gemischt wird und zu der erhaltenen Reaktionsmischung die Metall-, Phosphor- oder Borverbindung zugegeben wird, wenn das zugesetzte Wasser im wesentlichen verbraucht worden ist.

14. Bindemittel nach einem der Ansprüche 1 bis 13, **dadurch gekennzeichnet, dass** das Bindemittel partikelfrei ist.

15. Bindemittel nach einem der Ansprüche 1 bis 14, **dadurch gekennzeichnet, dass** es ein Polysiloxan mit mindestens einer reaktiven Gruppe ausgewählt aus Vinyl, Hydrid, Silanol, Alkoxy, Amine, Epoxy, Carbinol, Methacrylat/Acrylat, Mercapto, Acetoxy, Chlorid und Dimethylamin umfasst.

16. Verfahren zur Verfestigung von losen oder lockeren Substraten, bei dem das Bindemittel nach einem der Ansprüche 1 bis 15 mit Substrat vermischt oder darin infiltriert und dann gehärtet wird, wobei das Substrat bevorzugt eine geologische Formation, eine Körnung, eine Schüttung, Erdreich oder Gestein ist.

17. Formkörper aus einem feinteiligen, pulverförmigen oder gekörnten Substrat, das mit einem gehärteten Bindemittel nach einem der Ansprüche 1 bis 15 gebunden ist, wobei der Formkörper bevorzugt porös ist.

## Claims

1. A binder comprising
A) a hydrolysate or heterocondensate of at least one hydrolysable silicon compound and at least one metal, phosphorus or boron compound, the metal being selected from Al, Ge, Sn, Pb, Ti, Mg, Li, V, Nb, Ta, Zr and Hf,
B) at least one organic polymerizable or polycondensable monomer or oligomer,
C) a buffer, so that the pH value of the buffered binder is in the range from 4 to 6, and optionally a complexing agent,
wherein optionally the at least one hydrolysable silicon compound comprises one or more hydrolysable silicon compounds having at least one nonhydrolysable group or oligomers thereof.

2. The binder according to Claim 1, **characterized in that** the nonhydrolysable radical or radicals of the optional hydrolysable silicon compounds have no polymerizable group.

3. The binder according to Claim 1 or 2, **characterized in that** the buffer comprises a carboxylic acid and the conjugated base of the carboxylic acid, wherein the buffer is preferably an acetic acid/acetate buffer.

4. The binder according to any of Claims 1 to 3, **characterized in that** the buffer comprises a complexing agent selected from organic acids and chelating agents.

5. The binder according to any of Claims 1 to 4, **characterized in that** the organic polymerizable or polycondensable monomer or oligomer has a group capable of free radical polymerization.

6. The binder according to any of Claims 1 to 5, **characterized in that** the metal or boron compound comprises a complex ligand or the hydrolysate or heterocondensate is formed in the presence of a complex ligand.

7. The binder according to any one of Claims 1 to 6, **characterized in that** the metal, phosphorus or boron compound is a compound of B, Al, Sn, Ti and Zr, Ti being preferred.

8. The binder according to any of Claims 1 to 7, **characterized in that** the molar ratio of Si atoms to metal, phosphorus and boron atoms in the binder is in the range of from 10:1 to 1:3.

9. The binder according to any of Claims 1 to 8, **characterized in that** at least one hydrolysable silicon compound having a nonhydrolysable organic group without a polymerizable group and at least one hydrolysable silicon compound without nonhydrolysable groups are used for the hydrolysate or heterocondensate.

10. The binder according to any of Claims 1 to 9, **characterized in that** the binder comprises a polymerization initiator, wherein the polymerization initiator is preferably a free radical initiator, which is preferably a peroxide or an azo compound.

11. The binder according to any of Claims 1 to 10, **characterized in that** it comprises a heterocondensate which is a metallo-, phosphoro- or borosiloxane and contains heteroatom units of heteroatoms selected from P, B, Al, Ge, Sn, Pb, Ti, Mg, Li, V, Nb, Ta, Zr and Hf, which are incorporated into the siloxane skeleton via oxygen bridges, and siloxane units in which the silicon atom optionally has a nonhydrolysable organic group without a polymerizable group.

12. The binder according to any of Claims 1 to 11, **characterized in that** the weight ratio of heterocondensate and organic binder component from the organic monomers or oligomers, based on the cured binder, is 95:5 to 5:95.

13. The binder according to any of Claims 1 to 12, **characterized in that** the hydrolysate or heterocondensate is prepared in at least two stages, one or more hydrolysable compounds having a lower hydrolysis reactivity being prehydrolysed in the first stage and one or more hydrolysable compounds having a higher hydrolysis reactivity being added to the prehydrolysate in the final stage, and/or that, for the preparation of the hydrolysate or heterocondensate, the silicon compound is mixed with water for hydrolysis, and the metal, phosphorus or boron compound is added to the reaction mixture obtained when the added water has been substantially consumed.

14. The binder according to any of Claims 1 to 13, **characterized in that** the binder is particle-free.

15. The binder according to any of Claims 1 to 14, **characterized in that** it comprises a polysiloxane having at least one reactive group selected from vinyl, hydride, silanol, alkoxy, amines, epoxy, carbinol, methacrylate/acrylate, mercapto, acetoxy, chloride and dimethylamine.

16. A method for consolidating bulk or loose substrates, in which the binder according to any of Claims 1 to 15 is mixed with substrate or infiltrated therein and then cured, wherein the substrate is preferably a geological formation, a granulation, a bulk material, soil or rock.

17. A moulded article made of a finely divided, pulverulent or granular substrate, which is bonded with a cured binder according to any of Claims 1 to 15, wherein the moulded article is prefereably porous.

## Revendications

1. Liant comprenant :
A) un hydrolysat ou hétérocondensat d'au moins un composé hydrolysable du silicium et d'au moins un composé du phosphore, du bore ou d'un métal choisi parmi les aluminium, germanium, étain, plomb, titane, magnésium, lithium, vanadium, niobium, tantale, zirconium et hafnium ;
B) au moins un monomère ou oligomère organique polymérisable ou polycondensable ;
C) et un tampon, de sorte que le pH du liant tamponné vaille de 4 à 6, ainsi que, éventuellement, un agent complexant ;
étant entendu que, en option, le composé hydrolysable du silicium au nombre d'au moins un comprend un ou plusieurs composé(s) hydrolysable(s) du silicium comportant au moins un groupe non-hydrolysable ou oligomère(s) de tel(s) composé(s).

2. Liant conforme à la revendication 1, **caractérisé en ce que** le ou les groupe(s) non-hydrolysable(s) du ou des composé(s) hydrolysable(s) du silicium optionnel(s) ne comporte(nt) pas de groupes polymérisables.

3. Liant conforme à la revendication 1 ou 2, **caractérisé en ce que** le tampon comprend un acide carboxylique et la base conjuguée de cet acide carboxylique, le tampon étant de préférence un tampon acétate/acide acétique.

4. Liant conforme à l'une des revendications 1 à 3, **caractérisé en ce que** le tampon comprend un agent complexant choisi parmi les acides organiques et les agents chélatants.

5. Liant conforme à l'une des revendications 1 à 4, **caractérisé en ce que** le monomère ou oligomère organique polymérisable ou polycondensable comporte un groupe polymérisable par voie radicalaire.

6. Liant conforme à l'une des revendications 1 à 5, **caractérisé en ce que** le composé de bore ou de métal comprend un ligand de complexe ou **en ce que** l'hydrolysat ou hétérocondensat a été formé en présence d'un ligand de complexe.

7. Liant conforme à l'une des revendications 1 à 6, **caractérisé en ce que** le composé de phosphore, de bore ou de métal est un composé du bore, de l'aluminium, de l'étain, du titane ou du zirconium, le titane étant préféré.

8. Liant conforme à l'une des revendications 1 à 7, **caractérisé en ce que** le rapport molaire des atomes de silicium aux atomes de phosphore, bore et métal dans le liant vaut de 10/1 à 1/3.

9. Liant conforme à l'une des revendications 1 à 8, **caractérisé en ce que**, pour l'hydrolysat ou l'hétérocondensat, on utilise au moins un composé hydrolysable du silicium comportant au moins un groupe organique non-hydrolysable et sans groupe polymérisable, et au moins un composé hydrolysable du silicium sans groupe non-hydrolysable.

10. Liant conforme à l'une des revendications 1 à 9, **caractérisé en ce que** le liant comprend un amorceur de polymérisation, lequel amorceur de polymérisation est de préférence un amorceur à radicaux libres, qui est de préférence un peroxyde ou un composé azoïque.

11. Liant conforme à l'une des revendications 1 à 10, **caractérisé en ce qu'**il comprend un hétérocondensat qui est un métallosiloxane, un phosphorosiloxane ou un borosiloxane et qui contient des motifs hétéroatomiques, comportant des hétéroatomes choisis parmi des atomes de phosphore, bore, aluminium, germanium, étain, plomb, titane, magnésium, lithium, vanadium, niobium, tantale, zirconium et hafnium, qui sont incorporés dans le squelette de siloxane par l'intermédiaire de ponts oxygène, ainsi que des motifs de type siloxane dans lesquels l'atome de silicium porte éventuellement un groupe organique non-hydrolysable sans groupe polymérisable.

12. Liant conforme à l'une des revendications 1 à 11, **caractérisé en ce que** le rapport en poids de l'hétérocondensat et des composants organiques du liant provenant des monomères ou oligomères organiques vaut de 95/5 à 5/95 dans le liant durci.

13. Liant conforme à l'une des revendications 1 à 12, **caractérisé en ce que** l'hydrolysat ou l'hétérocondensat est préparé en au moins deux étapes au cours desquelles, dans la première étape, on soumet à une pré-hydrolyse un ou plusieurs composé(s) hydrolysable(s) doté(s) d'une réactivité en hydrolyse relativement faible, et dans la dernière étape, on ajoute au produit de cette pré-hydrolyse un ou plusieurs composé(s) hydrolysable(s) doté(s) d'une plus forte réactivité en hydrolyse, et/ou **en ce que**, pour préparer l'hydrolysat ou l'hétérocondensat, on mélange le composé du silicium avec de l'eau pour en provoquer l'hydrolyse, et l'on ajoute au mélange réactionnel ainsi obtenu le composé de phosphore, de bore ou de métal, une fois que l'eau ajoutée a été en grande partie consommée.

14. Liant conforme à l'une des revendications 1 à 13, **caractérisé en ce que** le liant ne contient pas de particules.

15. Liant conforme à l'une des revendications 1 à 14, **caractérisé en ce qu'**il comprend un polysiloxane comportant au moins un groupe réactif choisi parmi les suivants : vinyle, hydrure, silanol, alcoxy, amino, époxy, carbinol, méthacrylate/acrylate, mercapto, acétoxy, chlorure et diméthyl-amino.

16. Procédé de consolidation de substrats coulants ou poreux, dans lequel on mélange au substrat, ou l'on fait s'infiltrer dans le substrat, un liant conforme à l'une des revendications 1 à 15, puis on fait durcir celui-ci, le substrat étant de préférence une formation géologique, un matériau en grains, un matériau en vrac, de la terre ou de la pierraille.

17. Corps façonné, constitué d'un substrat finement divisé, en poudre ou en grains, qui est lié au moyen d'un liant conforme à l'une des revendications 1 à 15 durci, lequel corps façonné est de préférence poreux.
